# EUROPEAN PATENT SPECIFICATION

(11) **EP 1 221 286 B1**
(45) Date of publication and mention of the grant of the patent: **26.01.2005**
(21) Application number: 01204537.3
(22) Date of filing: 26.11.2001
(51) Int. Cl.: A23L 1/30, A23D 9/007, A23D 7/00, A23L 1/24

(54) **Method for the preparation of oil having increased polyphenol content**
Verfahren zur Herstellung von Öl mit erhöhtem Polyphenolgehalt
Procédé de préparation d'huile avec un taux de polyphénoles augmenté

(30) Priority: 22.12.2000 EP 00204714
(43) Date of publication of application: 10.07.2002
(73) Proprietor: UNILEVER N.V., 3013 AL Rotterdam (NL); UNILEVER PLC, London EC4P 4BQ (GB)
(72) Inventor: Husken, Henk, Unilever Research Vlaardingen, 3133 AT Vlaardingen (NL); Kooij, Stephanie, Unilever Research Vlaardingen, 3133 AT Vlaardingen (NL); van Putte, Karel Petrus, Unilever Res. Vlaardingen, 3133 AT Vlaardingen (NL)
(74) Representative: Kleiborn, Paul Erik

(56) References cited:
- EP-A- 0 849 353
- EP-A- 1 013 752
- WO-A-00/36936
- WO-A-00/38541
- WO-A-97/32947
- FR-A- 2 337 509
- FR-A- 2 499 368
- US-A- 5 998 641
- US-A- 6 162 480

## Description

The present invention relates to a method for increasing the polyphenol content of a triglyceride oil, in particular a vegetable oil and to the oil obtained with such a method. The invention relates also to food products containing a certain amount of such oil, such as spreads, mayonnaises, salad dressings and sauces.

### BACKGROUND OF THE INVENTION

Fats and oils form a substantial part of the average human food consumption. Since fat consumption is associated with an increased risk of cardiovascular disorders, the nutritional value of different types of fat as well as methods for reducing the amount of fat in food products has been the object of extensive investigation.

Recently, also the nature and the effects on health of fat attributes, the so-called minor nutrients which are present in small amounts in non-refined natural fats is subject of such investigations. It has been found that the minor nutrients which are denoted as anti-oxidants, including fat polyphenols, positively interfere with the body's cardiovascular system. Polyphenols are compounds which share a phenolic hydroxyl group. Usually polyphenols are present not as a single compound but as a mixture of different polyphenols. One of the sources of polyphenols are olives. Olive fruit originating polyphenols are for example oleuropein, aglycons, tyrosol or hydroxytyrosol.

Traditionally, most natural fats are refined before they are used as an ingredient for the preparation of food. However, traditional fat refining aims at the removal of all substances other than triglycerides, including minor nutrients. such as natural anti-oxidants, particularly the typical olive oil polyphenols. Therefore, there exists a need for increasing the level of anti-oxidants in oils or fats.

Several methods are proposed in the prior art to attain said goal. In WO 00/38541 it is for instance described to incorporate solid matter derived from non-debittered olive fruit in a food product such as a vegetable oil. In US 6,162,480 olive fruits are soaked in vegetable oil, preferably olive oil, so that polyphenols diffuse into the surrounding oil. According to US 5,998,641 olive oil is emulsified with an aqueous phase which contains a debittering enzyme. After exposure of the olive oil to the enzyme for at least one hour, an olive oil is obtained with a bitterness score which is low in relation to its polyphenols content being at least 200 ppm.

It is known to mix an olive fruit material with an acid when preparing certain food products such as for instance "tapenade" like products. In FR A 2 337 509 and FR A 2 499 368 products based on olives are described which are prepared by mixing olive pulp with flavouring agents such as pepper, chillies, etc., oil and citric acid or lemon juice. In these products it is intended to maintain the mixture of olive pulp and oil.

Fortification of food products with plant-derived polyphenols other than olive polyphenols is described in WO 97/32947. In WO00/36936 a method is decribed to enrich the aqueous phase of food compositions comprising an aqueous phase with hydrophilic polyphenols originating from olives. Fortification of olive oil with native or added oleuropein additionally to oleanolic acid is mentioned in EP 1013752.

According to the invention a novel method has been found to increase the level of antioxidants such as polyphenols in (refined) oils and fat based products such as spreads, mayonnaise, salad dressings and sauces. A further object is to increase the level of such antioxidants in an oil without deterioration of colour and taste of the oil.

### SUMMARY OF THE INVENTION

Those and other objects are attained by the method of the present invention, which comprises the steps of mixing the oil with olive fruit material and an aqueous acid solution obtaining a mixture, maintaining the mixture for at least 1 minute and separating the oil from the olive fruit material and the aqueous acid solution.

By means of this method the beneficial antioxidant components present in olive fruit material are released from the olive fruit material and extracted into the oil. After separation of the olive fruit material and the aqueous acid solution a clear oil is obtained having good taste and color properties and an increased polyphenol level.

### DETAILS OF THE INVENTION

The acid to be used for this method is in particular hydrochloric acid or a food grade acid such as citric acid, phosphoric acid, acetic acid, lactic acid, ascorbic acid or any other food grade acid. The acid is added to the mixture of oil and olive fruit material, preferably as a concentrated aqueous solution, for instance containing more than 30 % (w/w) acid. The aqueous acid solution has a pH of 4 or less, preferably 2 or less. Most preferably the pH is between 0 and 1. In general to obtain such pH, the amount of acid added is 0.1 to 30 wt. %, preferably 0.5 to 5 wt.%, based on pure acid and the weight of the mixture of oil and olive fruit material.

The olive fruit material can be whole olive fruits, olive fruit particles or olive residue. With olive residue is meant the residue that remains after production of olive oil by malaxation of olive fruits. Such a residue usually has a water content of about 50 to 70 wt.% and can have a polyphenol content of e.g. 2000 to 30,000 ppm (wt/wt). The polyphenol content varies for instance depending on the ripeness or the origin of the olives. The amount of olive fruit material in the oil is 0.1 to 50 wt.%, preferably 1 to 30 wt.%, based on the weight of the oil.

The temperature at which the oil is contacted with the olive fruit material is at least 10 °C. However, the method according to the invention is carried out preferably at elevated temperatures. This increases the amount of polyphenols transferred to the oil. Preferably, the oil is contacted with the olive fruit material at a temperature of at least 50 °C, more preferably at least 70 °C, most preferably 90 to 100 °C.

The optimal time for contacting oil and olive fruit material can be determined by a skilled person. In general this period will be at least 30 minutes, preferably at least 90 minutes. Preferably the mixture of oil, olive fruit material and aqueous acid solution is stirred during the contact time. Increasing the stirring rate will increase contact area and thus mass transfer of the polyphenols to the oil. At the end of the contact time the oil is separated from the olive fruit material and aqueous acid solution such as by filtration or decanting, preferably by centrifugation.

Preferably, the method according to the present invention is used to fortify vegetable oils. Examples of vegetable oils which can be fortified according to the invention are olive oil, rapeseed oil, sunflowerseed oil, soybean oil and corn oil. Preferably olive oil is fortified. The invention is not limited to fortification of oils which are devoid of any polyphenol, either by nature or because of a refining process, but also relates to oils which contain polyphenols of their own such as (extra) virgin olive oils. Examples of other olive oils which can be fortified according to the present invention are an extra virgin olive oil, a fine virgin olive oil, a semi-fine or regular virgin olive oil, a refined virgin olive oil, such as a Lampante oil, or an olive residue oil but also an olive oil blend, which contains part virgin olive oil and part refined olive oil.

The oil obtained with the above described method will have a polyphenol content of more than 150 ppm (wt/wt). The total content of polyphenols in oil can be established by standard methods, e.g. by the colorimetric Gutfinger method as described in J.Am.Oil.Chem.Soc. 1981, 11, pp. 966-968, which method is based on the reaction of a methanolic extract of olive oil and the Folin-Ciocalteau reagent. Polyphenol content can also be determined by HPLC. Another characteristic of the oil of this invention is that it is a clear oil, even though it contains a high amount of polyphenols. In particular the invention provides a clear, pure olive oil having a polyphenol content higher than 150 ppm (wt) (expressed as mg/kg caffeic acid equivalents).

The oil obtained with the invention can also be characterised by its HPLC chromatogram. It has appeared, as will be shown in the examples, that the oil of the invention has a HPLC profile which is different from the HPLC profile of current extra virgin olive oils or oils contacted with olive fruit material without the presence of acid. The profile of the oil of the invention is characterised by at least one distinguished peak situated between the peaks originating from aglycons which contain hydroxytyrosol or tyrosol moieties and the group of peaks originating from hydroxytyrosol and tyrosol themselves of which at least one peak corresponds to a concentration of at least 1 ppm. In particular three peaks are present in this area. The concentration of the component corresponding with the peak obtained can be estimated using known peak area/concentration relationships for tyrosol and hydroxy tyrosol.

When the following HPLC conditions are applied:
a Chrompack Intersil5 ODS column (reversed phase column), a gradient flow rate of 1 ml/min and an elution system consisting of solvent A (2% acetic acid in water) and solvent B (methanol), gradient: 0-20 min., A/B 85/15 %; 20-50 min., 15-75 B in A; 50-55 min., A/B 25/75, 55-56 min 75-100 B in A; 56-65 min., 100% B
the chromatogram of the oil shows at least one peak, in particular three peaks, in the area of a retention time of 15 to 30 minutes.

Food products can be admixed with the fortified oil and another oil, including products such as a spread, salad dressing, mayonnaise or sauce. Spreads are food compositions which usually contain a substantial amount of fat, often 40 wt.% or more. Usually the fat consists of a liquid oil and a structuring fat which gives the fat blend a proper consistency. Sauces are meant to include any type of sauce, for instance sauces that are ready to use, in particularly after having been heated, such as for instance tomato sauces. Processes for the manufacture of these products are well known in the art and need no illustration.

It goes without saying that the invention is not restricted to use of oils which only have a vegetable origin. Animal oils, including fish oil, can also be used. It might be advantageous to use a fat blend which partly consists of animal fat and/or marine oils or fats derived from such fats/oils by fractionation or interesterification. Fat and oil are terms which are used interchangeably in this specification. The term oil is generally used when the fat is liquid at ambient temperature.

### BRIEF DESCRIPTION OF THE FIGURES

The invention will now be further described by means of the nonlimiting examples and the attached figures, wherein
Figure 1 shows the increase of polyphenols in refined olive oil using concentrated hydrochloric acid;
Figure 2 shows the increase of polyphenols in refined olive oil using citric acid;
Figure 3 shows a HPLC analysis of a sample according to example 3 after 30 minutes; and
Figure 4 shows a HPLC analysis of a sample according to example 3 after 126 minutes and the addition of HCl.

### EXAMPLES

### Example 1

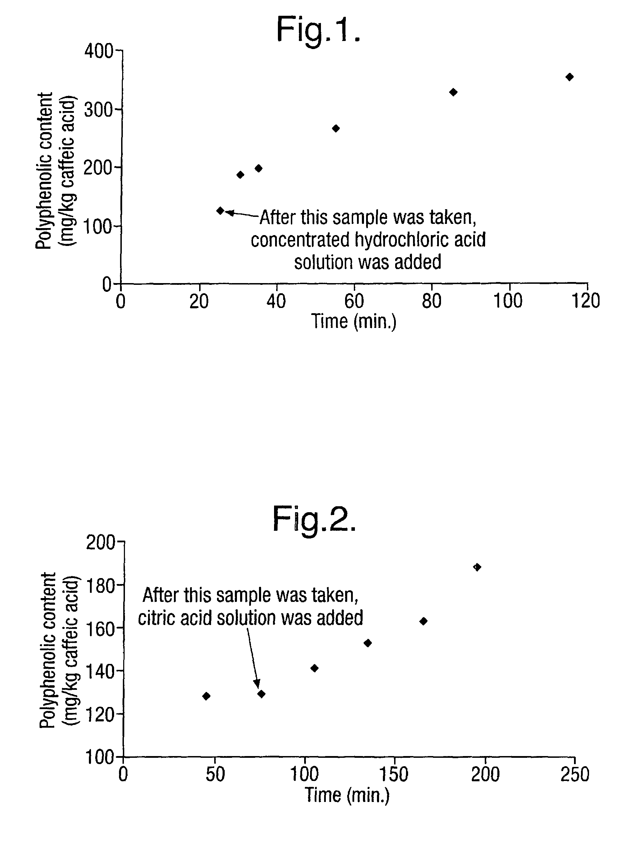

To 101.6 grams of olive residue, 205.5 grams of refined olive oil was added. The mixture was stirred mechanically and the temperature was subsequently raised to 95°C. The mixture was allowed to equilibrate. After 25 minutes a sample was taken and analysed for polyphenols using the Gutfinger method. Then 5 ml of a concentrated hydrochloric acid solution (37%) was added to the mixture. After several time intervals samples were taken and subsequently analysed for polyphenols using the Gutfinger method. In order to remove solids and water from the samples, the samples were centrifuged at 3500 rpm for 30 minutes. Results of the Gutfinger analysis are reported in figure 1. Polyphenol content increases quickly after addition of concentrated hydrochloric acid.

### Example 2

To 101.4 grams of olive residue, 206.1 grams of refined olive oil was added. The mixture was stirred mechanically and the temperature was subsequently raised to 95°C. The mixture was allowed to equilibrate. After 50 minutes and 80 minutes a sample was taken and analysed for polyphenols using the Gutfinger method. Then 10 ml of a citric acid solution (60% w/w) was added to the mixture. After several time intervals samples were taken and subsequently analysed for polyphenols using the Gutfinger method. In order to remove solids and water from the samples, the samples were centrifuged at 3500 rpm for 30 minutes. Results of the Gutfinger analysis are reported in figure 2. Polyphenol content increases quickly after addition of citric acid.

### Example 3

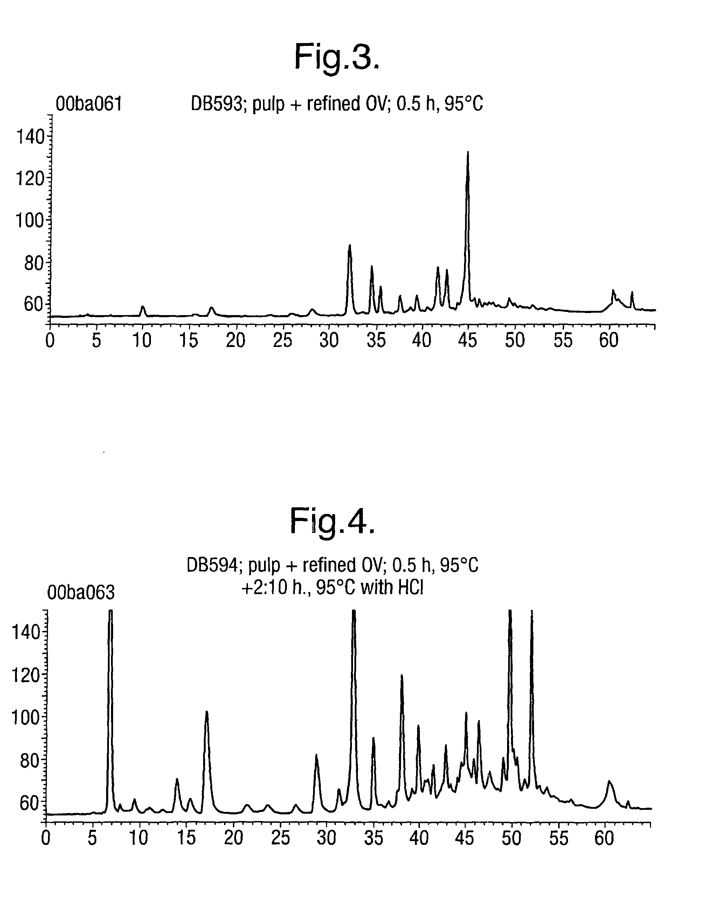

To 154.8 grams of olive residue, 303.5 grams of refined olive oil was added. The mixture was stirred mechanically and the temperature was subsequently raised to 95°C. The mixture was allowed to equilibrate. After 30 minutes a sample was taken and analysed for polyphenols using the Gutfinger method and analysed for the polyphenols composition using the HPLC method. Then 7.5 ml of a concentrated hydrochloric acid solution (37%) was added to the mixture. After 126 minutes a samples was taken and subsequently analysed for polyphenols using the Gutfinger method and analysed for the polyphenols composition using the HPLC method. In order to remove solids and water from the samples, the samples were centrifuged at 3500 rpm for 30 minutes. Results of the Gutfinger analysis are reported in table 1. The results of the HPLC analysis are reported in table 2. Table 2 also shows concentrations of compounds of which the retention time and the relationship concentration/peak area are known. The chromatograms are shown in figures 3 and 4.

For HPLC analysis the following method was used. The analytical separations were performed on a Waters 600 S liquid chromatograph equipped with a waters 616 pump and a waters 490 UV multiwavelength detector. Injection of the samples was carried out by a 10 ul Rheodyne sample loop. A chrompack 25 cm * 4.6 mm * ¼ inch Intersil5 ODS column was applied using a gradient flow rate of 1 ml/min. The elution system consisted of solvent A (2% acetic acid in water) and solvent B (methanol). Gradient: 0-20 min., A/B 85/15 %; 20-50 min., 15-75 B in A; 50-55 min., A/B 25/75, 55-56 min 75-100 B in A; 56-65 min., 100% B. UV was measured at 280 nm (for quantification) and 239 nm.

**TABLE 1**

| **Polyphenolic content** | |
|---|---|
| **Sample** | **Polyphenolic content** **(mg/kg caffeic acid)** |
| 30 minutes at 95°C | 146 |
| 126 minutes after adding acid | 397 |

**TABLE 2**

| **HPLC results** | | | | | |
|---|---|---|---|---|---|
| **Retention Time (minutes)** | **30 min. at 95°C (area)** | **30 min. at 95 °C (concentration) (mg/kg)** | **126 min. after adding acid (area)** | **126 min. after adding acid (concentration) (mg/kg)** | **Component** |
| 4.04 | 21923 | | | | |
| 6.65 | 8742 | | 4178232 | | |
| 7.76 | | | 135771 | | |
| 9.27 | 128361 | 1.7 | 145286 | 2.0 | Hydroxy tyrosol |
| 10.92 | | | 63763 | | |
| 14.88 | 36113 | | 607732 | | |
| 15.45 | | | 235714 | | |
| 16.37 | 149375 | 4.0 | 1832740 | 48.9 | Tyrosol |
| 21.47 | | | 221384 | *3-6* * | |
| 25.32 | 58590 | | 241784 | *3-7* * | |
| 27.67 | 128080 | | 168907 | *2-5* * | |
| 30.44 | | | 1023006 | | |
| 31.70 | 903041 | | 298597 | | |
| 33.46 | 50968 | | 3231294 | | |
| 34.05 | 502165 | | 716243 | | |
| 35.37 | 247782 | | 50434 | | |
| 36.71 | 28473 | | 82153 | | |
| 37.25 | 190364 | | 103863 | | |
| 38.40 | 54189 | | 1351964 | | |
| 39.05 | 165608 | | 98697 | | |
| 39.92 | 6239 | | 600276 | | |
| 40.10 | 37375 | | 28175 | | |
| 40.96 | 520092 | 18.0 | 244570 | 5.0 | Hydroxy tyrosol related aglycon |
| 41.78 | 403506 | | 28754 | | |
| 42.50 | | | 84376 | | |
| 42.83 | | | 380553 | | |
| 43.50 | | | 19008 | | |
| 43.94 | 59003 | | 266661 | | |
| 44.42 | 174534 3 | 49.0 | 943163 | 23.8 | Tyrosol related aglycon |
| 45.60 | 124423 | | | | |
| 45.30 | 81431 | | | | |
| 45.80 | 55349 | 1.5 | 744871 | 9.7 | Hydroxy tyrosol related aglycon |
| 46.42 | 81431 | | | | |
| 46.93 | 56294 | 19.5 | 189785 | 6.6 | Hydroxy tyrosol related aglycon |
| 47.46 | 21635 | 0.9 | 33105 | 0.9 | Hydroxy tyrosol related aglycon |
| 49.26 | 114016 | 4.5 | 183249 | 7.5 | Tyrosol related aglycon |
| 49.74 | 34295 | | | | |
| 50.29 | 11411 | 0.5 | 87843 | 3.2 | Tyrosol related aglycon |
| 51.74 | 33161 | | 1616271 | | |
| 52.10 | | | 1616271 | | |
| 52.37 | 19644 | | 64896 | | |
| 52.90 | | | 64896 | | |
| 53.57 | | | 76154 | | |

| | | | | | |
|---|---|---|---|---|---|
| * *estimated concentrations* | | | | | |

## Claims

1. Method for increasing the polyphenol content in an oil, comprising the steps of mixing the oil with olive fruit material and maintaining the mixture for at least one minute and separating the oil from the mixture, **characterised in that** also an aqueous acid solution is incorporated in the mixture.

2. Method according to claim 1, wherein the aqueous acid solution has a pH of 4 or less, preferably 2 or less.

3. Method according to claim 2, wherein the aqueous acid solution has a pH of 0 to 1.

4. Method according to claim 1, wherein the acid is hydrochloric acid, citric acid, phosphoric acid, acetic acid, lactic acid or ascorbic acid.

5. Method according to any of the preceding claims, wherein the olive fruit material is selected from the group consisting of whole olive fruits, olive fruit particles and olive residue.

6. Method according to any of the preceding claims, wherein the oil is contacted with the olive fruit material at a temperature of at least 50°C.

7. Method according to claim 6, wherein the temperature is at least 70°C, preferably 90 to 100°C.

8. Method according to any of the preceding claims, wherein the oil is separated from the olive fruit material and the aqueous acid solution by centrifugation, filtration, decanting.

9. Method according to any of the preceding claims, wherein the oil is a vegetable oil, preferably an olive oil.

## Patentansprüche

1. Verfahren zur Erhöhung des Polyphenolgehalts in einem Öl, umfassend die Schritte Mischen des Öls mit Olivenfruchtmaterial und Halten des Gemisches für mindestens 1 Minute und Abtrennen des Öls von dem Gemisch, **dadurch gekennzeichnet, dass** in das Gemisch auch eine wässrige Säurelösung eingearbeitet wird.

2. Verfahren nach Anspruch 1, wobei die wässrige Säurelösung einen pH von 4 oder weniger, vorzugsweise von 2 oder weniger, hat.

3. Verfahren nach Anspruch 2, wobei die wässrige Säurelösung einen pH von 0 bis 1 hat.

4. Verfahren nach Anspruch 1, wobei die Säure Salzsäure, Citronensäure, Phosphorsäure, Essigsäure, Milchsäure oder Ascorbinsäure ist.

5. Verfahren nach einem der vorangehenden Ansprüche, wobei das Olivenfruchtmaterial aus der Gruppe, bestehend aus ganzen Olivenfrüchten, Olivenfruchtteilchen und Olivenrückstand, ausgewählt wird.

6. Verfahren nach einem der vorangehenden Ansprüche, wobei das Öl bei einer Temperatur von mindestens 50°C mit dem Olivenfruchtmaterial in Kontakt gebracht wird.

7. Verfahren nach Anspruch 6, wobei die Temperatur mindestens 70°C, vorzugsweise 90 bis 100°C, ist.

8. Verfahren nach einem der vorangehenden Ansprüche, wobei das Öl von dem Olivenfruchtmaterial und der wässrigen Säurelösung durch Zentrifugation, Filtration, Dekantieren abgetrennt wird.

9. Verfahren nach einem der vorangehenden Ansprüche, wobei das Öl ein Pflanzenöl, vorzugsweise ein Olivenöl, ist.

## Revendications

1. Procédé pour augmenter la teneur en polyphénols dans une huile, comprenant les étapes consistant à mélanger l'huile avec le matériau des olives et à maintenir le mélange pendant au moins une minute et à séparer l'huile du mélange, **caractérisé en ce qu'**une solution acide aqueuse est également incorporée au mélange.

2. Procédé selon la revendication 1, dans lequel la solution acide aqueuse a un pH de 4 ou moins, de préférence de 2 ou moins.

3. Procédé selon la revendication 2, dans lequel la solution acide aqueuse a un pH de 0 à 1.

4. Procédé selon la revendication 1, dans lequel l'acide est l'acide chlorhydrique, l'acide citrique, l'acide phosphorique, l'acide acétique, l'acide lactique ou l'acide ascorbique.

5. Procédé selon l'une quelconque des revendications précédentes, dans lequel le matériau des olives est choisi dans le groupe constitué par les olives entières, les particules d'olives et le résidu d'olives.

6. Procédé selon l'une quelconque des revendications précédentes, dans lequel l'huile est mise en contact avec le matériau d'olives à une température d'au moins 50°C.

7. Procédé selon la revendication 6, dans lequel la température est au moins de 70°C, de préférence de 90 à 100°C.

8. Procédé selon l'une quelconque des revendications précédentes, dans lequel l'huile est séparée du matériau d'olives et de la solution acide aqueuse par centrifugation, filtration, décantation.

9. Procédé selon l'une quelconque des revendications précédentes, dans lequel l'huile est une huile végétale, de préférence une huile d'olive.
